# DEMANDE DE BREVET EUROPEEN

(11) **EP 1 002 854 A2**
(43) Date de publication de la demande: **24.05.2000**
(21) Numéro de dépôt: 99402622.7
(22) Date de dépôt: 22.10.1999
(51) Int. Cl.: C10J 3/64, C10J 3/66, C21B 5/00

(54) **Procédé de combustion, notamment pour l'élaboration de la fonte ou la fabrication de ciment**

(30) Priorité: 20.11.1998 FR 9814658
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Milosavljevic, Ivan, 75321 Paris Cedex 07 (FR); Duperray, Pascal, 75321 Paris Cedex 07 (FR); Arnoux, Stéphane, 75321 Paris Cedex 07 (FR)
(74) Mandataire: Vesin, Jacques

(57) **Abrégé**

L'invention concerne un procédé de combustion, selon lequel on soumet des déchets notamment ménagers et/ou industriels à un processus (T) comprenant au moins une étape dans laquelle on pyrolyse les déchets et on crée un mélange gazeux contenant des hydrocarbures, et ensuite une étape dans laquelle on met des hydrocarbures gazeux en présence de vapeur d'eau et d'oxydant, et aboutissant à la production d'un mélange gazeux final (MF) contenant du monoxyde de carbone et de l'hydrogène, puis on utilise au moins une partie du monoxyde de carbone et de l'hydrogène en mélange en tant que combustible par exemple dans un haut-fourneau (F) ou dans un four à ciment.

Le procédé est utilisable notamment pour fabriquer de la fonte ou du ciment.

## Description

L'invention concerne un procédé de combustion, notamment pour l'élaboration de fonte dans un haut-fourneau, en vue plus particulièrement de réduire la consommation de coke dans un tel procédé, sans affecter la qualité de la fonte produite, ou encore pour la fabrication de ciment dans un four à ciment.

On connaît déjà des procédés d'élaboration de la fonte dans des hauts-fourneaux, selon lesquels, pour réduire la consommation de coke, on injecte dans la zone de combustion du haut-fourneau un combustible auxiliaire tel que du charbon pulvérisé, du goudron, du fioul, du gaz naturel ou du gaz de cokerie, puis de manière classique on opère une fusion réductrice de minerais de fer et de fondants à l'aide de la chaleur et des gaz réducteurs obtenus par la combustion du coke et des autres combustibles et d'air préchauffé à haute température, et on recueille dans un creuset, le fer liquide carburé (fonte) et un laitier silicaté fluide formé des oxydes non réduits de la gangue des minerais, des fondants et des cendres du coke.

Par ailleurs, dans un tout autre domaine, on sait éliminer partiellement des déchets notamment ménagers et/ou industriels contenant des composés du carbone et en particulier des composés organiques, par pyrolyse ; cependant, cette pyrolyse dégage un mélange gazeux, contenant une proportion notable d'hydrocarbures, qui, lorsqu'on l'évacue dans l'atmosphère, contribue largement à la pollution atmosphérique ; on a donc cherché à transformer ce gaz de pyrolyse contenant des hydrocarbures ; à cette fin, on l'a soumis à un processus de synthèse dit de gazéïfication au cours duquel on le met en présence de vapeur d'eau et d'oxygène à une température relativement élevée, et ainsi on décompose tout ou partie des hydrocarbures, on réduit ou on craque la vapeur d'eau, et on oxyde le carbone, créant de ce fait du monoxyde de carbone et de l'hydrogène. Dans le nouveau mélange gazeux obtenu, dit « gaz de synthèse », la fraction monoxyde de carbone + hydrogène est combustible et peut être utilisée comme telle.

L'invention a pour but de mettre en oeuvre ces enseignements visant à réduire le rejet dans l'atmosphère de substances polluantes, de manière à réduire la consommation de coke dans les hauts-fourneaux, ou encore de charbon pulvérisé ou/et de mazout ou/et de gaz dans les fours à ciment.

A cette fin, l'invention concerne un procédé de combustion, caractérisé en ce que l'on soumet des déchets notamment ménagers et/ou industriels à un processus comprenant au moins une étape dans laquelle on pyrolyse les déchets et on crée un mélange gazeux contenant des hydrocarbures, et ensuite une étape dans laquelle on met des hydrocarbures gazeux en présence de vapeur d'eau et d'un oxydant, et aboutissant à la production d'un mélange gazeux final contenant du monoxyde de carbone et de l'hydrogène, puis on utilise au moins une partie du monoxyde de carbone et de l'hydrogène en mélange en tant que combustible.

Avantageusement, pour utiliser au moins une partie du monoxyde de carbone et de l'hydrogène en mélange, on l'introduit en tant que combustible et réducteur dans un haut-fourneau où l'on introduit par ailleurs du coke.

Grâce au fait que l'on introduit du monoxyde de carbone et de l'hydrogène en mélange dans le haut-fourneau, on apporte à celui-ci non seulement un combustible d'appoint permettant de réduire la consommation de coke, mais également un réducteur contribuant à la réduction des oxydes de fer, et cela sans avoir à attendre que la cinétique de la réaction endothermique d'oxydation du coke par du dioxyde de carbone formé par combustion aboutisse à la formation dans le haut-fourneau même de monoxyde de carbone et que ce monoxyde de carbone soit parfaitement diffusé dans la cuve du haut-fourneau.

En alternative, pour utiliser au moins une partie du monoxyde de carbone et de l'hydrogène en mélange, on l'introduit en tant que combustible dans un four à ciment.

Le procédé peut de plus présenter, selon l'utilisation prévue, une ou plusieurs des caractéristiques suivantes :
- ledit processus comprend, à la suite d'une étape dans laquelle on met des hydrocarbures gazeux en présence de vapeur d'eau et d'un oxydant et ainsi on crée un mélange gazeux contenant du monoxyde de carbone et de l'hydrogène, une étape complémentaire dans laquelle on extrait au moins un métal appartenant au groupe constitué par les métaux lourds, afin de créer un mélange gazeux final exempt de ce métal ;
- dans l'étape de pyrolyse, on pyrolyse les déchets à une température au moins égale à 300°C environ ;
- dans l'étape dans laquelle on met des hydrocarbures gazeux en présence de vapeur d'eau et d'un oxydant, on élève la température des hydrocarbures, on isole le carbone de ces hydrocarbures, on décompose l'eau pour en obtenir l'oxygène, et on fait une synthèse de carbone et d'oxygène pour obtenir au moins du monoxyde de carbone et de l'hydrogène ;
- on produit un mélange gazeux final dont au moins une moitié environ est constituée d'un mélange de monoxyde de carbone et d'hydrogène ;
- on produit un mélange gazeux final contenant de l'hydrogène et du monoxyde de carbone avec un rapport hydrogène/monoxyde de carbone de 0,5 à 3 environ, et de préférence contenant approximativement la même quantité d'hydrogène et de monoxyde de carbone ;
- on introduit un mélange de monoxyde de carbone et d'hydrogène dans au moins une tuyère d'un haut-fourneau ;
- on introduit dans un haut-fourneau un mélange de monoxyde de carbone et d'hydrogène à température élevée, de l'ordre de 1200°C ;
- il comporte une étape au cours de laquelle on règle le rapport hydrogène/monoxyde de carbone du mélange que l'on introduit dans un haut-fourneau ;
- on introduit au moins une partie du monoxyde de carbone et de l'hydrogène en mélange dans une zone de combustion principale d'un four à ciment ;
- on introduit au moins une partie du monoxyde de carbone et de l'hydrogène en mélange dans une zone de postcombustion d'un four à ciment ;
- on introduit au moins une partie du monoxyde de carbone et de l'hydrogène en mélange dans une zone de grille « Lepol » d'un four à ciment ;
- on introduit au moins une partie du monoxyde de carbone et de l'hydrogène en mélange dans un four à ciment par un moyen d'injection dédié ;
- on introduit au moins une partie du monoxyde de carbone et de l'hydrogène en mélange dans un four à ciment, en l'injectant dans la flamme d'un brûleur principal ;
- on introduit dans le four à ciment au moins une partie du monoxyde de carbone et de l'hydrogène en mélange, et de l'oxygène ; et
- on introduit dans le four à ciment au moins une partie du monoxyde de carbone et de l'hydrogène en mélange, et de l'oxygène, par des mêmes moyens d'injection.

D'autres caractéristiques et avantages de l'invention ressortiront de la description qui va suivre d'un exemple non limitatif de procédé selon l'invention illustré sur les dessins joints dans lesquels :

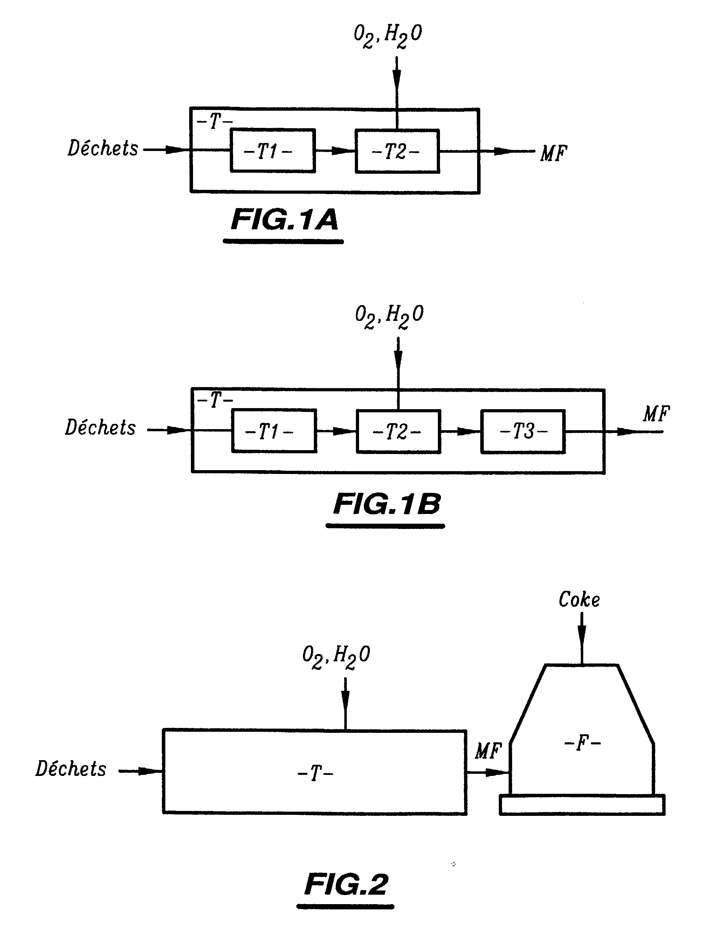

- la figure 1a est un schéma synoptique d'un processus de traitement de déchets aboutissant à la production d'un gaz combustible utilisé dans un procédé selon l'invention,
- la figure 1b est un schéma synoptique d'une variante du processus de la figure 1a, et
- la figure 1c est un schéma synoptique d'un procédé selon l'invention.

Dans le procédé illustré par ces figures, on commence par un processus T dans lequel on traite des déchets, par exemple des déchets ménagers ou/et des déchets industriels et on produit un mélange gazeux final MF contenant du monoxyde de carbone et de l'hydrogène, et on termine par la combustion du mélange gazeux, par exemple en l'introduisant dans un haut-fourneau où l'on introduit par ailleurs du coke, ou encore dans un four à ciment.

Les étapes du processus T (figures 1a et 1b), de traitement des déchets sont choisies en fonction de la nature des déchets, de manière que l'on obtienne un mélange gazeux final MF suffisamment riche en monoxyde de carbone et en hydrogène et exempt de produits nocifs pour l'utilisation envisagée, ici pour l'élaboration de la fonte.

Pour obtenir un mélange gazeux final MF relativement riche en hydrogène et en monoxyde de carbone sans trop de pertes, par exemple un mélange dont au moins une moitié environ est constituée elle-même d'un mélange dans lequel le rapport hydrogène/monoxyde de carbone est d'environ 0,5 à 3, et de préférence approximativement égal à 1, il est souhaitable que l'on parte de déchets riches en carbone et en hydrogène, par exemple riches en matières organiques.

Dans ces conditions, dans une première étape T1 du processus T de traitement, on pyrolyse les déchets, et on dégage un premier mélange gazeux dit « gaz de pyrolyse » contenant une proportion notable d'hydrocarbures à l'état gazeux. De préférence, la pyrolyse est effectuée à au moins 300°C environ, pendant quelques heures ; il est naturellement possible d'opérer plus rapidement, à une température plus élevée.

Dans une deuxième étape T2, connue sous le nom de gazéïfication, on transforme le mélange contenant des hydrocarbures à l'état gazeux (gaz de pyrolyse), en un deuxième mélange gazeux contenant du monoxyde de carbone et de l'hydrogène. En général, dans cette étape T2, on porte la température du premier mélange gazeux à une température relativement élevée et on le met en présence de vapeur d'eau et d'un oxydant (par exemple de l'air éventuellement enrichi en oxygène, ou de l'oxygène) ; de cette manière, on décompose tout ou partie des hydrocarbures à l'état gazeux, c'est-à-dire qu'on isole le carbone, et on craque ou on réduit la vapeur d'eau, ce qui libère l'oxygène de celle-ci, et on fait la synthèse du carbone et de l'oxygène dans les conditions permettant que l'on obtienne principalement du monoxyde de carbone. Au moyen de l'oxygène (ou, de manière plus générale, de l'oxydant) que l'on introduit en plus de la vapeur d'eau, on amorce et on entretient la réaction endothermique de synthèse, grâce au maintien en température assuré par l'oxygène.

Ce deuxième mélange gazeux, s'il répond aux conditions mentionnées plus haut, est de préférence le mélange gazeux final MF que l'on introduit dans le haut-fourneau (figure 1a), directement à la haute température à laquelle il se trouve, à savoir environ 1200°C en général.

Dans le cas contraire (figure 1b), on peut le soumettre à au moins une étape T3 complémentaire par laquelle on l'enrichit en monoxyde de carbone ou en hydrogène, ou/et on en élimine les produits nocifs ; cela est notamment le cas si le deuxième mélange gazeux contient des vapeurs de métaux lourds, notamment de zinc ; dans cette hypothèse dans l'étape T3 de traitement du deuxième mélange gazeux, on extrait ces métaux lourds, et on aboutit à un troisième mélange gazeux, qui est le mélange gazeux final MF.

On peut noter qu'en revanche ce mélange gazeux final peut contenir certaines impuretés, par exemple de la vapeur d'eau et/ou de l'anhydride de carbone.

Puis, on transmet le mélange gazeux final MF, qu'il soit constitué par le gaz de synthèse obtenu en sortie de l'étape T2 de gazéification ou par le gaz issu d'une étape complémentaire T3, de préférence à haute température, par exemple à environ 1200°C, au haut-fourneau F, et plus précisément dans au moins une tuyère de celui-ci (aboutissant généralement, de manière connue, à un creuset), haut-fourneau où l'on introduit par ailleurs le coke de manière connue, habituellement avec du minerai de fer et du fondant (castine, dolomie, ou analogue).

L'intérêt du procédé selon l'invention est clair, puisqu'il permet d'une part de réduire le rejet dans l'atmosphère des hydrocarbures gazeux émis lors de la combustion des déchets, et d'autre part de réduire notablement le coût de fabrication de la fonte.

En effet, l'élaboration de fonte dans un haut-fourneau utilise environ 500 kg de coke par tonne de fonte ; en remplaçant 15% du coke par le mélange gazeux final issu du processus décrit plus haut, on a besoin de 2400 MJ/tonne de fonte, ce qui nécessite 300 kg de mélange gazeux final par tonne de fonte.

Or, le processus de fabrication du mélange gazeux final permet d'obtenir environ 900 kg de mélange gazeux à partir d'une tonne de déchets (et de 500 kg d'oxygène), et l'équivalent électrique de ces 900 kg de mélange gazeux peut être estimé à 340 kw.h correspondant à une somme A (prix de commercialisation de ces 340 kw.h auprès d'un distributeur d'énergie électrique) ; il en résulte que l'utilisation de 300 kg de mélange gazeux par tonne de fonte revient à A/3 par tonne de fonte.

Cependant, la réduction de la consommation de coke se traduit par une économie B par tonne de fonte, actuellement sensiblement supérieure à A/3.

L'économie globale est donc B-A/3 par tonne de fonte, et, dans les conditions actuelles, l'amortissement de l'installation de mise en oeuvre du processus aboutissant à la fabrication du mélange gazeux final est suffisamment rapide pour permettre une exploitation du procédé largement bénéficiaire.

Bien entendu, l'invention n'est pas limitée aux modes ci-dessus décrits et représentés, et on pourra en prévoir d'autres sans sortir de son cadre ; notamment, on peut régler la proportion hydrogène/monoxyde de carbone en intervenant par exemple dans l'étape T2 de gazéïfication ou/et dans l'éventuelle étape T3 complémentaire ou/et en effectuant un traitement approprié dans une autre étape complémentaire que l'on met en oeuvre à la suite de l'étape T2 et si elle existe avant ou après l'étape T3.

En particulier, il est opportun d'adapter les étapes du processus T pour obtenir un mélange gazeux final compatible avec l'utilisation désirée, qui peut être, en variante, par exemple une combustion par introduction dans un four à ciment dans lequel on peut introduire par ailleurs du charbon pulvérisé ou/et du mazout ou/et du gaz.

Dans le cas où le mélange gazeux final (ou au moins une partie du monoxyde de carbone et de l'hydrogène en mélange) est destiné à alimenter un four à ciment, le mélange peut être injecté dans la zone de combustion principale du four ou/et dans une autre zone du four, telle qu'une éventuelle zone de postcombustion ou/et la zone de la grille connue dans la technique sous le nom de « grille Lepol », au moyen de lance(s) ou/et de brûleur(s) « dédiés » à ce mélange. Dans la zone de la combustion principale, on peut injecter le mélange directement dans la flamme du brûleur principal. Il est possible de combiner l'injection du mélange et une injection d'oxygène mélangé à de l'air pour « enrichir » celui-ci ou pur, soit séparément, soit conjointement par les mêmes moyens d'injection.

## Revendications

1. Procédé de combustion, caractérisé en ce que l'on soumet des déchets notamment ménagers et/ou industriels à un processus (T) comprenant au moins une étape (T1) dans laquelle on pyrolyse les déchets et on crée un mélange gazeux contenant des hydrocarbures, et ensuite une étape (T2) dans laquelle on met des hydrocarbures gazeux en présence de vapeur d'eau et d'un oxydant, et aboutissant à la production d'un mélange gazeux final (MF) contenant du monoxyde de carbone et de l'hydrogène, puis on utilise au moins une partie du monoxyde de carbone et de l'hydrogène en mélange en tant que combustible.

2. Procédé selon la revendication 1, caractérisé en ce que, pour utiliser au moins une partie du monoxyde de carbone et de l'hydrogène en mélange, on l'introduit en tant que combustible et réducteur dans un haut-fourneau (F) où l'on introduit par ailleurs du coke.

3. Procédé selon la revendication 1, caractérisé en ce que le processus (T) comprend, à la suite d'une étape (T2) dans laquelle on met des hydrocarbures gazeux en présence de vapeur d'eau et d'un oxydant et ainsi on crée un mélange gazeux contenant du monoxyde de carbone et de l'hydrogène, une étape complémentaire (T3) dans laquelle on extrait au moins un métal appartenant au groupe constitué par les métaux lourds, afin de créer un mélange gazeux final (MF) exempt de ce métal.

4. Procédé selon la revendication 1, caractérisé en ce que dans l'étape (T1) de pyrolyse, on pyrolyse les déchets à une température au moins égale à 300°C environ.

5. Procédé selon la revendication 1, caractérisé en ce que dans l'étape (T2) dans laquelle on met des hydrocarbures gazeux en présence de vapeur d'eau et d'un oxydant, on élève la température des hydrocarbures, on isole le carbone de ces hydrocarbures, on décompose l'eau pour en obtenir l'oxygène, et on fait une synthèse de carbone et d'oxygène pour obtenir au moins du monoxyde de carbone et de l'hydrogène.

6. Procédé selon la revendication 1, caractérisé en ce que l'on produit un mélange gazeux final (MF) dont au moins une moitié environ est constituée d'un mélange de monoxyde de carbone et d'hydrogène.

7. Procédé selon la revendication 1, caractérisé en ce que l'on produit un mélange gazeux final (MF) contenant de l'hydrogène et du monoxyde de carbone avec un rapport hydrogène/monoxyde de carbone de 0,5 à 3 environ, et de préférence contenant approximativement la même quantité d'hydrogène et de monoxyde de carbone.

8. Procédé selon la revendication 1, caractérisé en ce que l'on introduit un mélange de monoxyde de carbone et d'hydrogène dans au moins une tuyère d'un haut-fourneau (F).

9. Procédé selon la revendication 1, caractérisé en ce que l'on introduit dans un haut-fourneau un mélange de monoxyde de carbone et d'hydrogène à température élevée, de l'ordre de 1200°C.

10. Procédé selon la revendication 1, caractérisé en ce qu'il comporte une étape au cours de laquelle on règle le rapport hydrogène/monoxyde de carbone du mélange que l'on introduit dans un haut-fourneau.

11. Procédé selon la revendication 1, caractérisé en ce que, pour utiliser au moins une partie du monoxyde de carbone et de l'hydrogène en mélange, on l'introduit en tant que combustible dans un four à ciment.

12. Procédé selon la revendication 11, caractérisé en ce que l'on introduit au moins une partie du monoxyde de carbone et de l'hydrogène en mélange dans une zone de combustion principale d'un four à ciment.

13. Procédé selon la revendication 11, caractérisé en ce que l'on introduit au moins une partie du monoxyde de carbone et de l'hydrogène en mélange dans une zone de postcombustion d'un four à ciment.

14. Procédé selon la revendication 11, caractérisé en ce que l'on introduit au moins une partie du monoxyde de carbone et de l'hydrogène en mélange dans une zone de grille « Lepol » d'un four à ciment.

15. Procédé selon la revendication 11, caractérisé en ce que l'on introduit au moins une partie du monoxyde de carbone et de l'hydrogène en mélange dans un four à ciment par un moyen d'injection dédié.

16. Procédé selon la revendication 11, caractérisé en ce que l'on introduit au moins une partie du monoxyde de carbone et de l'hydrogène en mélange dans un four à ciment, en l'injectant dans la flamme d'un brûleur principal.

17. Procédé selon la revendication 11, caractérisé en ce que l'on introduit dans le four à ciment au moins une partie du monoxyde de carbone et de l'hydrogène en mélange, et de l'oxygène.

18. Procédé selon la revendication 11, caractérisé en ce que l'on introduit dans le four à ciment au moins une partie du monoxyde de carbone et de l'hydrogène en mélange, et de l'oxygène, par des mêmes moyens d'injection.
